# EUROPEAN PATENT SPECIFICATION

(11) **EP 0 488 509 B1**
(45) Date of publication and mention of the grant of the patent: **24.07.1996**
(21) Application number: 91309349.8
(22) Date of filing: 10.10.1991
(51) Int. Cl.: G01N 15/12

(54) **Particle detector, particle detecting apparatus and method of operating a particle detector**
Teilchendetektor, Vorrichtung zur Detektion von Teilchen und ein Verfahren zum Betreiben enes Teilchendetektor
Détecteur de particules, appareil pour détecter des particules et procédé de mise en oeuvre d'un détecteur de particules

(30) Priority: 30.11.1990 JP 340798/90
(43) Date of publication of application: 03.06.1992
(73) Proprietor: TOA MEDICAL ELECTRONICS CO., LTD., Chuoku, Kobe (JP)
(72) Inventor: Kouzuki, Chihiro, Kasaishi, Hyogoken (JP)
(74) Representative: Price, Paul Anthony King

(56) References cited:
- EP-A- 0 068 404
- EP-A- 0 187 663
- US-A- 4 352 558
- US-A- 4 515 274

## Description

The present invention relates to a particle detector for detecting particles of cells, blood corpuscles or the like by passing them through an orifice in sheath liquid. The present invention also relates to particle detecting apparatus incorporating such a detector and to a method of operating a particle detector.

A known particle detecting apparatus is disclosed in US-A-3,746,977 and has a pair of electrodes disposed across an orifice (aperture) for detecting particles individually on the basis of changes of electrical impedance caused when particles pass through the orifice. Another known particle detecting apparatus is disclosed in US-A-4,790,653 and in EP-A-0,068,404 and forms a sheath flow and passes a stream of the particles through the centre of its orifice. Detection electrodes are positioned upstream and downstream of the orifice. In this case, the term "sheath flow" means a laminar flow of sheath liquid which surrounds a suspension of particles, in order to pass the particles in a line through the middle of the orifice.

In such particle detecting apparatus, the inside diameter of the orifice is, as a matter of course, unchanged, and the size of measurable particles is substantially fixed at one value.

For example, when measuring large particles, there arise problems of clogging or loss of linearity (linear correlation) between the size of particles and magnitude of detection signal; when measuring small particles, a sufficient S/N ratio is not obtained, and signals are concealed by noise and cannot be detected. By raising the detection current, the S/N ratio may be raised somewhat, but it may result in adverse effects on particles or lead to other problems. Incidentally, the S/N ratio is the ratio of the desired signal to the noise mixed in the signal and, the higher the S/N ratio, the easier it is to detect signals.

If desired to measure without problem from small particles to large particles, it is required to vary the size of the orifice depending on the particle size. That is, in the case of large particles, it is necessary to measure with a wider orifice diameter and, in the case of small particles, a narrower orifice diameter is desired. However, since the orifice is assembled into the detector body, to vary the orifice diameter it is necessary to prepare a plurality of detectors having different orifice diameters, and to exchange the detectors depending on the particles to be measured.

If the diameter of the orifice is variable, a range of particle widths may be measured. In the conventional apparatus, it was time consuming because the detectors had to be exchanged. Also, the orifice diameter could only have the preset values of the various prepared detectors. If the orifice diameter can be set to any value, it is possible to measure particles of any size under optimum conditions, which would be a great advance in particle measurement.

US-A-4,352,558 discloses particle detecting apparatus which does not use electrodes to detect particles as they pass through its orifice. Instead, a laser beam passes transversely across the orifice. Two or three concentric fluid flows of substantially the same sheath liquid are used to surround a central flow of a liquid specimen which contains particles. The diameter ratio of the central flow and the adjacent concentric sheath flow may be varied by longitudinally moving one or both of the tubes which discharge those two flows.

According to a first aspect of the present invention, there is provided a particle detector for passing a liquid specimen containing particles through an orifice whilst surrounded by sheath liquid, and for detecting particles individually by using the difference in electrical impedance of liquid and the particles, the detector comprising: an orifice; means for passing through the orifice and recovering a multilayer flow comprising a conductive liquid specimen containing particles and forming an inner layer, with a conductive first sheath liquid surrounding the inner layer; and a pair of electrodes, one of which is disposed in electrical contact with the conductive liquids upstream of the orifice and the other of which is disposed in electrical contact with the conductive liquids downstream of the orifice; characterized in that the means for passing through the orifice and recovering the multilayer flow is arranged to form the conductive first sheath liquid as a middle layer and is arranged to include in the multilayer flow a nonconductive second sheath liquid surrounding the inner and middle layers and forming an outer layer.

By varying the flow rates of the first and second sheath liquids, it is possible to continuously vary the effective orifice diameter (as defined by the diameter of the middle layer) so as to provide optimum detection conditions for particles of different size. Also, the varying of effective orifice diameter is achieved in a simple manner that does not require pieces of the detector to be physically exchanged.

Preferably, the means for passing through the orifice and recovering the multilayer flow comprises: a liquid specimen outlet pipe disposed upstream of the orifice; a first sheath liquid outlet pipe disposed concentrically around the liquid specimen outlet pipe; a first recovery pipe disposed downstream of the orifice; and a second recovery pipe disposed concentrically around the first recovery pipe. Alternatively, the means for passing through the orifice and recovering the multilayer flow comprises: a liquid specimen outlet pipe disposed upstream of the orifice; a first sheath liquid outlet pipe disposed concentrically around the liquid specimen outlet pipe; and a single recovery pipe disposed downstream of the orifice.

Preferably, the pair of electrodes comprise the first sheath liquid outlet pipe and first recovery pipe, both of which are made of conductive material.

Particle detecting apparatus may comprise a particle detector according to the present invention and a detector circuit connected to the pair of electrodes for detecting particles in the conductive liquid specimen of the inner layer by detecting changes in the electrical impedance between the electrodes.

Preferably, the means for passing through the orifice and recovering the multilayer flow further comprises liquid specimen supply means, first sheath liquid supply means and second sheath liquid supply means respectively connected to the liquid specimen outlet pipe, the first sheath liquid outlet pipe and a second sheath liquid outlet pipe disposed around the first sheath liquid outlet pipe.

According to a second aspect of the present invention, there is provided a method of operating a particle detector, comprising: providing a multilayer flow comprising a flow of conductive first sheath liquid around a flow of a conductive liquid specimen containing particles and forming an inner layer; passing the multilayer flow through an orifice; providing a first electrode in electrical contact with the flows of conductive liquid upstream of the orifice, and a second electrode in electrical contact with the flows of conductive liquid downstream of the orifice; and detecting the particles by detecting changes in the electrical impedance between the first and second electrodes; characterized in that: the flow of conductive first sheath liquid is provided as a middle layer and the multilayer flow further comprises a flow of nonconductive second sheath liquid as an outer layer; and the method further comprises adjusting the balance of the flows in order to vary the effective diameter of the orifice for the flows of conductive liquid.

The conductive first sheath liquid may be physiological saline or the like and the nonconductive second sheath liquid may be purified water or ethyl alcohol.

If the orifice is cylindrical, the inside diameter of the orifice may be designated d. The outside diameter of the inner layer (liquid specimen flow) in the orifice may be designated a, the outside diameter of the middle layer (conductive liquid flow) may be designated b, and the outside diameter of the outer layer (nonconductive liquid flow) may be designed c (c = d). An electric current flows from one electrode to the other electrode through the conductive liquid layers (inner layer, middle layer). The outer layer is nonconductive, and the current does not flow through this layer. Accordingly, the current flows only in the internal region with the diameter b, and the diameter of the orifice is effectively b.

By varying the flow rate balance of the conductive liquid and nonconductive liquid, the diameter b of the middle layer may be continuously changed. Thus, the effective orifice diameter may be continuously varied.

The invention will now be described by way of a non-limiting embodiment and modifications thereof, with reference to the accompanying drawings, in which:-
Fig. 1 is a vertical sectional view showing the embodiment of the particle detector in accordance with the present invention;
Fig. 2 is a magnified view of the orifice area shown in Fig. 1;
Fig. 3 is a sectional view showing another example of the orifice area for a particle detector in accordance with the present invention; and
Fig. 4 and Fig. 5 are sectional views showing other embodiments of the recovery pipe for a particle detector in accordance with the present invention.

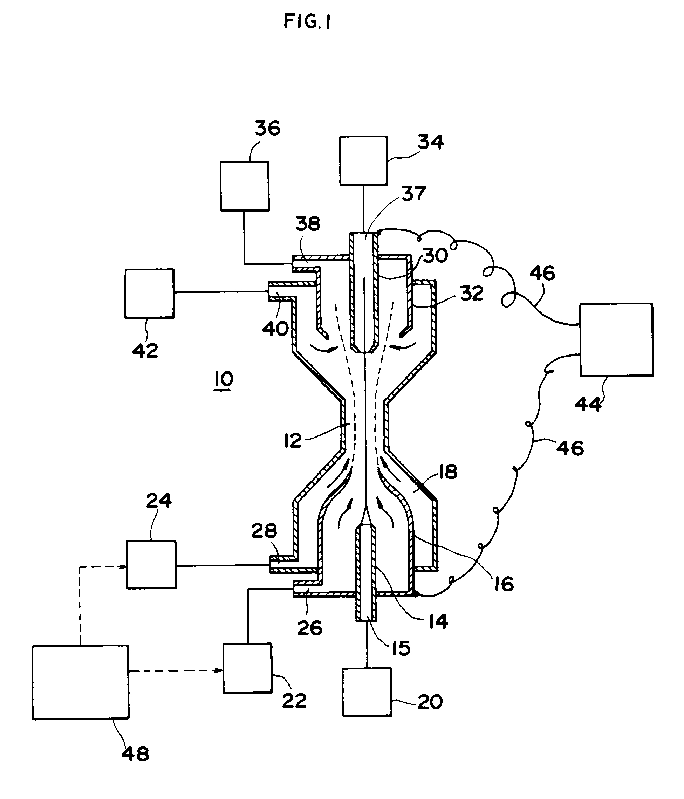

In Fig. 1, numeral 10 is a detector and 12 is an orifice (for example, its inside diameter is 100 µm, and length is 120 µm). At the upstream side of the orifice 12, (bottom of Fig. 1), there is a liquid specimen outlet pipe 14 for discharging a liquid specimen containing particles, and a first sheath liquid outlet pipe 16 is disposed concentrically around the liquid specimen outlet pipe 14. The liquid specimen is constantly discharged from liquid specimen supply means 20 (for example, a syringe capable of discharging the liquid at a specific flow rate from a piston) connected to a supply port 15. The front end of the first sheath liquid outlet pipe 16 is located at the downstream side (upward in Fig. 1) of the liquid from the front end of the liquid specimen outlet pipe 14, and the end of the pipe 16 is tapered. This ensures the smooth formation of laminar flow. The first sheath liquid is supplied from the first sheath liquid supply means 22 (syringe or means for pushing out liquid at specific pressure) to a supply port 26 disposed in the lower part of the first sheath liquid outlet pipe 16. The first sheath liquid flow encloses and surrounds the liquid specimen. Numeral 18 is a path for the second sheath liquid.

With the invention, it is so arranged that a second sheath liquid flows outside the first sheath liquid. The second sheath is a nonconductive liquid. The nonconductive second sheath liquid is supplied into a supply port 28 disposed in the lower part of the detector 10 from second sheath liquid supply means 24 (syringe or means for pushing out liquid at specific pressure).

At the downstream side of the orifice 12, a first recovery pipe 30 is provided, and a second recovery pipe 32 is disposed concentrically around the first recovery pipe 30. In this embodiment, the front end of the second recovery pipe 32 is at the downstream side from the front end of the first recovery pipe 30. Numerals 34, 36 are waste liquid tubs, and the waste liquid tubs 34, 36 are respectively connected to the outlet 37 of the first recovery pipe 30 and the outlet 38 of the second recovery pipe 32. Numeral 42 is syringe liquid supply means for providing a back sheath, and it is connected to the inlet 40 above the detector 10.

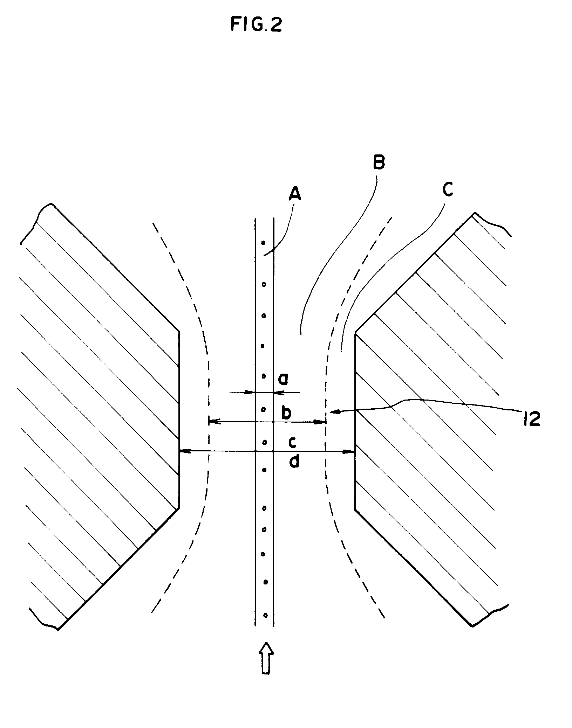

As shown in Fig. 2, a three-layer flow is formed, consisting of the liquid specimen as inner layer A, first sheath liquid as middle layer B, and second sheath liquid as outer layer C. Being a laminar flow, the liquid of each layer flows without mixing with the other layers. If it was not a laminar flow, each liquid would mix with the other liquid at each boundary, and particle detection would be unstable.

The liquid specimen and first sheath liquid are conductive, and the second sheath liquid is nonconductive. A pair of electrodes are disposed on either side of the orifice 12 in contact with the conductive liquid (for example, the first sheath liquid). In this embodiment, the first sheath liquid outlet pipe 16 and the first recovery pipe 30 are made of conductive material and used as electrodes. More specifically, the first sheath liquid outlet pipe 16 is made of stainless steel and functions as the negative electrode, and the first recovery pipe 30 is made of platinum and functions as the positive electrode. In the first recovery pipe 30, all of the liquid specimen and a part of the first sheath liquid are recovered and, in the second recovery pipe 32, the remainder of the first sheath liquid and all of the second sheath liquid are recovered together with syringe liquid.

Numeral 44 is a detector circuit for supplying a current between the positive electrode 30 and negative electrode 16, and detecting the changes in electric impedance. Numeral 46 is an electric wire. The current flows through the conductive liquid, but does not flow through the nonconductive liquid. Accordingly, by varying the sectional area of the conductive liquid flows (inner layer A and middle layer B) in this three-layer flow, the size of the orifice may be substantially changed. To vary the sectional area of the conductive liquid flows (inner layer A and middle layer B), it is enough to change the flow rate balance of the conductive liquid and nonconductive liquid. This requires, at least, means for varying the first sheath liquid supply rate and second sheath liquid supply rate. Numeral 48 is the control means for controlling the liquid supply rate. For obtaining a better laminar flow, it is preferable that the control means 48 also controls the supply rate and discharge rate of all liquids.

What has been described is one example of a detector such as flow cell of a flow cytometer or the like, but alternative constructions are possible.

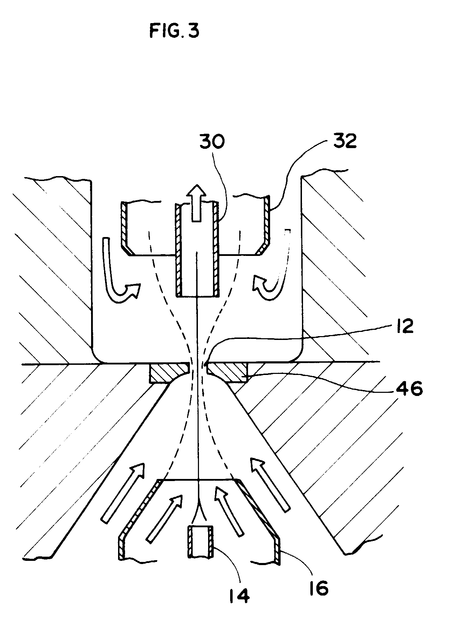

For example, as shown in Fig. 3, a circular orifice 12 may be formed in the center of a disc-shaped orifice plate 46 made of artificial ruby, ceramics or similar material.

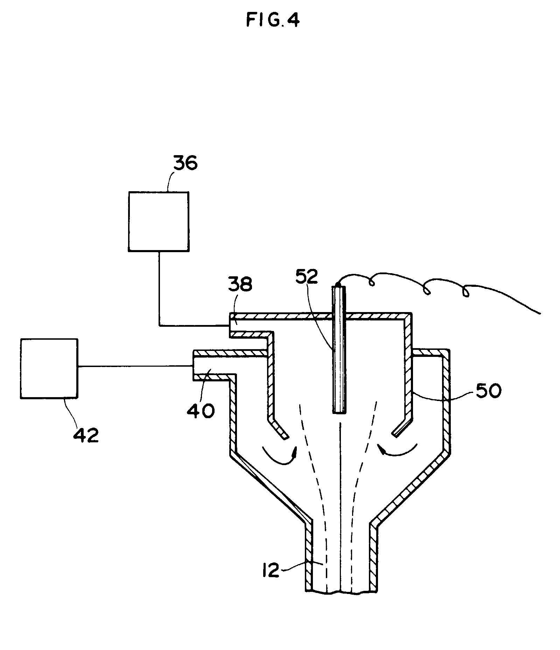

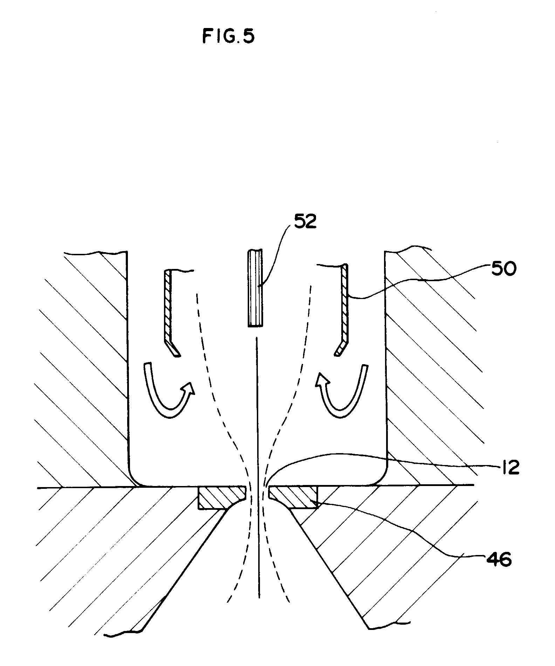

In the embodiment shown in Figs. 4, 5, instead of the first recovery pipe 30 and second recovery pipe 32, a recovery pipe 50 of nearly the same shape as the second recovery pipe is provided, and all of the liquid specimen of inner layer A, first sheath liquid of the middle layer B and second sheath liquid of the outer layer C is recovered in the recovery pipe 50. Inside this recovery pipe 50, a positive electrode 52 is disposed so as to contact the conductive liquid.

Otherwise, the construction and operation are the same as for Figs. 1 to 3.

The above described embodiments of the invention offer the following benefits.
(1) A flow of a nonconductive liquid is provided as the outer layer, and current does not flow in this nonconductive layer, so that the apparent diameter of the orifice (the sectional area) may be reduced. Also, since the thickness of the nonconductive liquid layer may be freely varied as necessary, the diameter of the orifice may be substantially changed.
(2) To vary the diameter of the orifice, it is enough to change the balance of the flowing liquids, and it does not require the trouble of exchanging the detector or the like. The construction is simple, too.
(3) Since the diameter of the orifice may be freely changed, the range of measurable particles may be extremely wide. That is, from small particles to large ones, it is always possible to measure in optimum conditions without causing problems such as clogging, noise and lack of linearity (linear correlation).

## Claims

1. A particle detector (10) for passing a liquid specimen containing particles through an orifice (12) whilst surrounded by sheath liquid, and for detecting particles individually by using the difference in electrical impedance of liquid and the particles, the detector (10) comprising:
an orifice (12);
means (14, 16, 18, 30, 32, 50) for passing through the orifice (12) and recovering a multilayer flow comprising a conductive liquid specimen containing particles and forming an inner layer (A), with a conductive first sheath liquid surrounding the inner layer (A); and
a pair of electrodes (16, 30, 52), one of which is disposed in electrical contact with the conductive liquids upstream of the orifice (12) and the other of which is disposed in electrical contact with the conductive liquids downstream of the orifice (12);
characterized in that the means (14, 16, 18, 30, 32, 50) for passing through the orifice (12) and recovering the multilayer flow is arranged to form the conductive first sheath liquid as a middle layer (B) and is arranged to include in the multilayer flow a nonconductive second sheath liquid surrounding the inner and middle layers (A, B) and forming an outer layer (C).

2. A particle detector (10) according to claim 1, wherein the means (14, 16, 18, 30, 32) for passing through the orifice (12) and recovering the multilayer flow (A, B, C) comprises:
a liquid specimen outlet pipe (14) disposed upstream of the orifice (12);
a first sheath liquid outlet pipe (16) disposed concentrically around the liquid specimen outlet pipe (14);
a first recovery pipe (30) disposed downstream of the orifice (12); and
a second recovery pipe (32) disposed concentrically around the first recovery pipe (30).

3. A particle detector (10) according to claim 1, wherein the means (14, 16, 18, 50) for passing through the orifice (12) and recovering the multilayer flow (A, B, C) comprises:
a liquid specimen outlet pipe (14) disposed upstream of the orifice (12);
a first sheath liquid outlet pipe (16) disposed concentrically around the liquid specimen outlet pipe (14); and
a single recovery pipe (50) disposed downstream of the orifice (12).

4. A particle detector (10) according to claim 2, wherein the pair of electrodes (16, 30) comprise the first sheath liquid outlet pipe (16) and first recovery pipe (30), both of which are made of conductive material.

5. Particle detecting apparatus comprising a particle detector (10) according to any one of claims 1 to 4 and a detector circuit (44) connected to the pair of electrodes (16, 30, 52) for detecting particles in the conductive liquid specimen of the inner layer (A) by detecting changes in the electrical impedance between the electrodes (16, 30, 52).

6. Particle detecting apparatus according to claim 5, wherein the particle detector (10) is in accordance with claim 2, 3 or 4 and the means (14, 16, 18, 30, 32, 50) for passing through the orifice (12) and recovering the multilayer flow (A, B, C) further comprises liquid specimen supply means (20), first sheath liquid supply means (22) and second sheath liquid supply means (24) respectively connected to the liquid specimen outlet pipe (14), the first sheath liquid outlet pipe (16) and a second sheath liquid outlet pipe (18) disposed around the first sheath liquid outlet pipe (16).

7. A method of operating a particle detector (10), comprising:
providing a multilayer flow comprising a flow (B) of conductive first sheath liquid around a flow (A) of a conductive liquid specimen containing particles and forming an inner layer;
passing the multilayer flow through an orifice (12);
providing a first electrode (16) in electrical contact with the flows (A, B) of conductive liquid upstream of the orifice (12), and a second electrode (30, 52) in electrical contact with the flows (A, B) of conductive liquid downstream of the orifice (12); and
detecting the particles by detecting changes in the electrical impedance between the first and second electrodes (16, 30, 52);
characterized in that:
the flow (B) of conductive first sheath liquid is provided as a middle layer and the multilayer flow further comprises a flow (C) of nonconductive second sheath liquid as an outer layer;
and the method further comprises adjusting the balance of the flows in order to vary the effective diameter (b) of the orifice for the flows (A, B) of conductive liquid.

8. A method according to claim 7, wherein the balance of the flows (A, B, C) of conductive and nonconductive liquids is adjusted by varying the balance of the flow rates of the middle and outer layers (B, C).

9. A method according to claim 7 or 8, wherein downstream of the orifice (12) a single recovery pipe (50) recovers all of the flows (A, B, C) of nonconductive liquid and conductive liquid, and the second electrode (52) is positioned inside the recovery pipe (50).

## Patentansprüche

1. Teilchendetektor (10) zur Führung einer Teilchen enthaltenden Flüssigkeitsprobe durch eine Öffnung (12), während sie von einer Umhüllungsflüssigkeit umgeben ist, und zur einzelnen Feststellung von Teilchen durch Verwendung des Unterschiedes der elektrischen Impedanz von Flüssigkeit und Teilchen, wobei der Detektor (10)
eine Öffnung (12),
Einrichtungen (14, 16, 18, 30, 32, 50) zur Führung eines mehrschichtigen Flusses, der eine leitfähige Flüssigkeitsprobe, die Teilchen enthält und eine Innenschicht (A) bildet, mit einer die Innenschicht (A) umgebenden leitfähigen ersten Umhüllungsflüssigkeit umfaßt, durch die Öffnung (12) und Gewinnung dieses Flusses und
ein Paar Elektroden (16, 30, 52), von denen eine in elektrischem Kontakt mit den leitfähigen Flüssigkeiten aufstromwärts von der Öffnung (12) angeordnet ist und deren andere in elektrischem Kontakt mit den leitfähigen Flüssigkeiten abstromwärts von der Öffnung (12) angeordnet ist, umfaßt,
**dadurch gekennzeichnet**, daß die Einrichtungen (14, 16, 18, 30, 32, 50) zur Führung des mehrschichtigen Flusses durch die Öffnung (12) und zu seiner Gewinnung so angeordnet ist, daß die leitfähige erste Umhüllungsflüssigkeit eine Mittelschicht (B) bildet, und so angeordnet ist, daß in dem mehrschichtigen Fluß eine nichtleitfähige zweite Umhüllungsflüssigkeit eingeschlossen wird, die die innere und die mittlere Schicht (A, B) umgibt und eine Außenschicht (C) bildet.

2. Teilchendetektor (10) nach Anspruch 1, bei dem die Einrichtungen (14, 16, 18, 30, 32) zum Führen des mehrschichtigen Flusses (A, B, C) durch die Öffnung (12) und zu seiner Gewinnung:
ein Flüssigkeitsprobenauslaßrohr (14), das aufstromwärts von der Öffnung (12) angeordnet ist,
eine erste Umhüllungsflüssigkeitsauslaßleitung (16), die konzentrisch um die Flüssigkeitsprobenauslaßleitung (14) angeordnet ist,
eine erste Gewinnungsleitung (30), die abstromwärts von der Öffnung (12) angeordnet ist, und
eine zweite Gewinnungsleitung (32), die konzentrisch um die erste Gewinnungsleitung (30) angeordnet ist, umfassen.

3. Teilchendetektor (10) nach Anspruch 1, bei dem die Einrichtungen (14, 16, 18, 50) zum Führen des mehrschichtigen Flusses (A, B, C) durch die Öffnung (12) und seine Gewinnung:
eine Flüssigkeitsprobenauslaßleitung (14), die aufstromwärts von der Öffnung (12) angeordnet ist,
eine erste Umhüllungsflüssigkeitsauslaßleitung (16), die konzentrisch um die Flüssigkeitsprobenauslaßleitung (14) angeordnet ist, und
eine einzige Gewinnungsleitung (50), die abstromwärts von der Öffnung (12) angeordnet ist, umfassen.

4. Teilchendetektor (10) nach Anspruch 2, bei dem das Paar von Elektroden (16, 30) die erste Umhüllungsflüssigkeitsauslaßleitung (16) und die erste Gewinnungsleitung (30), die beide aus leitfähigem Material bestehen, umfaßt.

5. Teilchenfeststellungsvorrichtung mit einem Teilchendetektor (10) nach einem der Ansprüche 1 bis 4 und einem Detektorstromkreis (44), der mit dem Elektrodenpaar (16, 30, 52) verbunden ist, um Teilchen in der leitfähigen Flüssigkeitsprobe der Innenschicht (A) durch Feststellung von Veränderungen der elektrischen Impedanz zwischen den Elektroden (16, 30, 52) zu ermitteln.

6. Teilchenfeststellungsvorrichtung nach Anspruch 5, bei der der Teilchendetektor (10) gemäß Anspruch 2, 3 oder 4 ist und die Einrichtungen (14, 18, 30, 32, 50) zum Führen des mehrschichtigen Flusses (A, B, C) durch die Öffnung (12) und zu seiner Gewinnung weiterhin eine Flüssigkeitsprobenzufuhreinrichtung (12), eine erste Umhüllungsflüssigkeitszufuhreinrichtung (22) und eine zweite Umhüllungsflüssigkeitszufuhreinrichtung (24) umfassen, die jeweils mit der Flüssigkeitsprobenauslaßleitung (14), der ersten Umhüllungsflüssigkeitsauslaßleitung (16) und einer zweiten Umhüllungsflüssigkeitsauslaßleitung (18), die um die erste Umhüllungsflüssigkeitsauslaßleitung (16) angeordnet ist, verbunden sind.

7. Verfahren zum Betreiben eines Teilchendetektors (10), bei dem man
einen mehrschichtigen Fluß, der einen Strom (B) von leitfähiger erster Umhüllungsflüssigkeit um einen Strom (A) einer leitfähigen Flüssigkeitsprobe, die Teilchen enthält und eine Innenschicht bildet, vorsieht,
den mehrschichtigen Fluß durch eine Öffnung (12) führt,
eine erste Elektrode (16) in elektrischem Kontakt mit den Strömen (A, B) der leitfähigen Flüssigkeit aufstromwärts von der Öffnung (12) und eine zweite Elektrode (30, 52) in elektrischem Kontakt mit den Strömen (A, B) von leitfähiger Flüssigkeit abstromwärts von der Öffnung (12) vorsieht und
die Teilchen durch Feststellung von Veränderungen der elektrischen Impedanz zwischen der ersten und zweiten Elektrode (16, 30, 52) ermittelt,
**dadurch gekennzeichnet**, daß der Strom (B) von leitfähiger erster Umhüllungsflüssigkeit als eine Mittelschicht vorgesehen wird und der mehrschichtige Fluß weiterhin einen Strom (C) von nichtleitfähiger zweiter Umhüllungsflüssigkeit als eine Außenschicht umfaßt,
und daß das Verfahren weiterhin eine Einstellung des Abgleichs der Ströme umfaßt, um den wirksamen Durchmesser (b) der Öffnung für die Ströme (A, B) der leitfähigen Flüssigkeit zu variieren.

8. Verfahren nach Anspruch 7, bei dem der Abgleich der Ströme (A, B, C) von leitfähigen und nichtleitfähigen Flüssigkeiten durch Variieren des Abgleichs der Fließgeschwindigkeiten der Mittelschicht und der Außenschicht (B, C) eingestellt wird.

9. Verfahren nach Anspruch 7 oder 8, bei dem abstromwärts von der Öffnung (12) eine einzelne Gewinnungsleitung (50) die Gesamtheit der Ströme (A, B, C) von nichtleitfähiger Flüssigkeit und leitfähiger Flüssigkeit gewinnt und die zweite Elektrode (52) innerhalb der Gewinnungsleitung (50) angeordnet ist.

## Revendications

1. Détecteur de particules (10) pour faire passer un échantillon de liquide contenant des particules par un orifice (12) lorsqu'il est entouré par un liquide d'enveloppe, et pour détecter des particules individuellement en utilisant la différence d'impédance électrique entre le liquide et les particules, le détecteur (10) comprenant :
un orifice (12) ;
un moyen (14, 16, 18, 30, 32, 50) pour faire passer par l'orifice (12) et pour récupérer un écoulement multicouche comprenant un échantillon de liquide conducteur contenant des particules et formant une couche intérieure (A), avec un premier liquide d'enveloppe conducteur entourant la couche intérieure (A) ; et
une paire d'électrodes (16, 30, 52), dont l'une est placée en contact électrique avec les liquides conducteurs en amont de l'orifice (12) et dont l'autre est placée en contact électrique avec les liquides conducteurs en aval de l'orifice (12).
caractérisé en ce que le moyen (14, 16, 18, 30, 32, 50) pour faire passer par l'orifice (12) et pour récupérer l'écoulement multicouche est agencé pour former le premier liquide d'enveloppe conducteur en tant que couche intermédiaire (B) et est agencé pour inclure dans l'écoulement multicouche un second liquide d'enveloppe non - conducteur entourant les couches intérieure et intermédiaire (A, B) et formant une couche extérieure (C).

2. Détecteur de particules (10) selon la revendication 1, dans lequel le moyen (14, 16, 18, 30, 32) pour faire passer par l'orifice (12) et pour récupérer l'écoulement multicouche (A, B, C) comprend :
un tuyau de sortie d'échantillon de liquide (14) placé en amont de l'orifice (12) ;
un tuyau de sortie (16) de premier liquide d'enveloppe placé de manière concentrique autour du tuyau de sortie (14) d'échantillon de liquide ;
un premier tuyau de récupération (30) placé en aval de l'orifice ( 12) ; et
un second tuyau de récupération (32) placé de manière concentrique autour du premier tuyau de récupération (30).

3. Détecteur de particules (10) selon la revendication 1, dans lequel le moyen (14, 16, 18, 50) pour faire passer par l'orifice (12) et pour récupérer l'écoulement multicouche (A, B, C) comprend
un tuyau de sortie (14) d'échantillon de liquide placé en amont de l'orifice (12) ;
un tuyau de sortie (16) de premier liquide d'enveloppe placé de manière concentrique autour du tuyau de sortie (14) d'échantillon de liquide ; et
un tuyau de récupération unique (50) placé en aval de l'orifice (12).

4. Détecteur de particules (10) selon la revendication 2, dans lequel la paire d'électrodes (16, 30) comprend le tuyau de sortie (16) de premier liquide d'enveloppe et le premier tuyau de récupération (30), les deux étant faits de matière conductrice.

5. Appareil détecteur de particules comprenant un détecteur de particules (10) selon l'une quelconque des revendications 1 à 4 et un circuit détecteur (44) raccordé à la paire d'électrodes (16, 30, 52) pour détecter des particules dans l'échantillon de liquide conducteur de la couche intérieure (A) en mesurant les variations de l'impédance électrique entre les électrodes (16, 30, 52).

6. Appareil détecteur de particules selon la revendication 5, dans lequel le détecteur de particules (10) est conforme à la revendication 2, 3 ou 4 et le moyen (14, 16, 18, 30, 32, 50) pour faire passer par l'orifice (12) et pour récupérer l'écoulement multicouche (A, B, C) comprend en outre un moyen d'alimentation en échantillon de liquide (20), un moyen d'alimentation en premier liquide d'enveloppe (22) et un moyen d'alimentation en second liquide d'enveloppe (24) respectivement raccordés au tuyau de sortie (14) d'échantillon de liquide, au tuyau de sortie (16) de premier liquide d'enveloppe et à un tuyau de sortie (18) de second liquide d'enveloppe placé autour du tuyau de sortie (16) de premier liquide d'enveloppe.

7. Procédé de mise en oeuvre d'un détecteur de particules (10), comprenant :
la production d'un écoulement multicouche comprenant un écoulement (B) de premier liquide d'enveloppe conducteur autour d'un écoulement (A) d'un échantillon de liquide conducteur contenant des particules et formant une couche intérieure ;
le passage de l'écoulement multicouche par l'orifice (12) ;
la production d'une première électrode (16) en contact électrique avec les écoulements (A, B) de liquide conducteur en amont de l'orifice (12), et une seconde électrode (30, 52) en contact électrique avec les écoulements (A, B) de liquide conducteur en aval de l'orifice (12); et
la détection des particules en mesurant les variations de l'impédance électrique entre les première et seconde électrodes (16, 30, 52) ;
caractérisé en ce que :
l'écoulement (B) de premier liquide d'enveloppe conducteur est fourni en tant que couche intermédiaire et l'écoulement multicouche comprend en outre un écoulement (C) de second liquide d'enveloppe non - conducteur en tant que couche extérieure ;
et le procédé comprend en outre le réglage de l'équilibre des écoulements afin de faire varier le diamètre utile (b) de l'orifice pour les écoulements (A, B) de liquide conducteur.

8. Procédé selon la revendication 7, dans lequel l'équilibre des écoulements (A, B, C) de liquides conducteur et non - conducteur est réglé en faisant varier l'équilibre entre les débits des couches intermédiaire et extérieure (B, C).

9. Procédé selon la revendication 7 ou 8, dans lequel en aval de l'orifice (12) un tuyau de récupération unique (50) récupère tous les écoulements (A, B, C) de liquide non - conducteur et de liquide conducteur, et la seconde électrode (52) est placée à l'intérieur du tuyau de récupération (50).
